# EUROPÄISCHE PATENTSCHRIFT

(11) **EP 1 150 190 B1**
(45) Veröffentlichungstag und Bekanntmachung des Hinweises auf die Patenterteilung: **06.08.2003**
(21) Anmeldenummer: 01106163.7
(22) Anmeldetag: 13.03.2001
(51) Int. Cl.: G05B 19/048, G05B 19/042

(54) **Vorrichtung und Verfahren zur Steuerung und/oder Regelung einer Anlage**
Apparatus and method for controlling and/or regulating of a technical installation
Dispositif et procédé de commande et/ou de régulation d'une installation technique

(30) Priorität: 11.04.2000 DE 10017932
(43) Veröffentlichungstag der Anmeldung: 31.10.2001
(73) Patentinhaber: SIEMENS AKTIENGESELLSCHAFT, 80333 München (DE)
(72) Erfinder: Becker, Joerg, 48326 Auburn Hills, MI (US); Fiedler, Stephan, 93059 Regensburg (DE)

(56) Entgegenhaltungen:
- EP-A- 0 762 249
- PATENT ABSTRACTS OF JAPAN vol. 1998, no. 11, 30. September 1998 (1998-09-30) & JP 10 161934 A (NISSAN MOTOR CO LTD), 19. Juni 1998 (1998-06-19)

## Beschreibung

Vorrichtung und Verfahren zur Steuerung und/oder Regelung einer Anlage

Die Erfindung betrifft eine Vorrichtung bzw. ein Verfahren zur Steuerung und/oder Regelung einer Anlage, wobei Applikationsdaten zur Steuerung und/oder Regelung verwendet werden, die in einem externen Speicher abgelegt sind.

Bei solchen Anlagen ergibt sich das Problem, daß die im externen Speicher herstellerseitig vorgesehenen Applikationsdaten von unbefugter Hand verändert werden können, so daß nicht mehr das vom Hersteller beabsichtigte Betriebsverhalten erreicht wird.

Darüber hinaus kann eine derart manipulierte Anlage auch betriebsunsicher werden.

Um solche unerwünschte Veränderungen von Applikationsdaten zu vermeiden, ist es bekannt, im externen Speicher eine sogenannte Prüfsumme abzulegen. Durch Überprüfung dieser Prüfsumme kann festgestellt werden, ob die Applikationsdaten geändert wurden. Leider ist diese Sicherheitsmaßnahme leicht zu umgehen, da der Algorithmus zur Bildung der Prüfsumme meist bekannt ist. Das gleiche gilt für das Ablegen von sogenannten Schlüsselworten, deren Sicherungsfunktion ebenfalls leicht umgangen werden kann (siehe z. B. Patent Abstracts of Japan, Veröffentlichungsnummer 10161934, Veröffentlichungsdatum 19.06.1998).

In einem anderen Ansatz ist man dazu übergegangen, die Datenleitungen, über die der externe Speicher angesprochen wird, abweichend von vorgegebenen Industriestandards zu vertauschen, so daß bei einem Manipulationsversuch mit einem externen Lesegerät keine sinnvollen Daten ausgelesen werden können. Die Vertauschungsmöglichkeiten sind jedoch stark eingeschränkt, weshalb zur Manipulation wenige Versuche ausreichen, um das Vertauschungsschema zu ermitteln.

Ein populärer Fall dieser Problematik findet sich im Bereich der Kraftfahrzeugtechnik, wo für Steuergeräte von Brennkraftmaschinen Applikationsdaten, die beispielsweise das Leistungs- oder Abgasverhalten der Brennkraftmaschine wesentlich beeinflussen, in einem externen Speicher vorgehalten werden. Bei den Applikationsdaten kann es sich beispielsweise um Kennfelder handeln. Durch unbefugtes Verändern dieser im externen Speicher abgelegten Applikationsdaten wird oftmals versucht, eine Leistungssteigerung der Brennkraftmaschine zu erreichen (sogenanntes Chip-tuning). Dabei werden aber häufig die einzuhaltenden Abgasgrenzwerte überschritten. Auch sinkt die Lebensdauer einer derart leistungsgesteigerten Anlage. Ein Hersteller kann sich in einem solchen Fall mit einer unberechtigten Regreßforderung konfrontiert sehen, wobei der unberechtigte leistungssteigernde Eingriff meist nicht nachweisbar ist, wenn vor Geltendmachen der Regreßforderung wieder die ursprünglichen Applikationsdaten in den externen Speicher eingegeben werden.

Der Erfindung liegt die Aufgabe zugrunde, eine Vorrichtung und ein Verfahren zur Steuerung und/oder Regelung einer Anlage anzugeben, bei dem eine Manipulation von Applikationsdaten stark erschwert ist.

Diese Aufgabe wird durch die in Anspruch 1 gekennzeichnete Vorrichtung sowie das in Anspruch 6 gekennzeichnete Verfahren gelöst.

Die Erfindung sieht vor, daß Applikationsdaten im externen Speicher verschlüsselt abgelegt sind. Die Schutzmöglichkeiten sind jedoch dadurch eingeschränkt, daß beim Zugriff auf Applikationsdaten keine Zeitverzögerung entstehen darf. Eine Verschlüsselung von Applikationsdaten bringt Rechen- und damit Zeitaufwand bei der Entschlüsselung mit sich, der mit dem Grad der Verschlüsselung steigt. Deshalb ist es nicht möglich, sinnvoll, d.h. manipulationssicher verschlüsselte Applikationsdaten während des Betriebes der Anlage vor dem Zugriff zu entschlüsseln. Es ist deshalb vorgesehen, die Applikationsdaten manipulationssicher vorzuhalten und schon beim Start der Anlage in einen internen Arbeitsspeicher einzulesen und dabei zu entschlüsseln. Ein Zugriff auf den externen Speicher liefert somit nur verschlüsselte Applikationsdaten.

Die Entschlüsselung in der Startphase der Anlage und das Ablegen der unverschlüsselten Applikationsdaten im internen Arbeitsspeicher stellt sicher, daß während des Betriebs der Anlage zeitaufwendige Entschlüsselungsvorgänge nicht mehr nötig sind.

Bei der Entschlüsselung muß ein Entschlüsselungskode verwendet werden. Vorzugsweise wird bei der Verschlüsselung und Entschlüsselung ein sogenannter asymmetrischer Algorithmus eingesetzt, der einen ersten Schlüssel zum Verschlüsseln und einen zweiten Schlüssel um Entschlüsseln aufweist, wobei die Kenntnis des Entschlüsselungskodes nicht erlaubt, auf den Verschlüsselungskode rückzuschließen. Somit kann optional der Entschlüsselungskode ebenfalls im externen Speicher abgelegt werden, ohne daß bei einer Manipulation das Auslesen dieses Entschlüsselungskodes den Unbefugten in die Lage versetzen würde, veränderte Applikationsdaten so zur Ablage im externen Steuergerät zu verschlüsseln, daß diese beim Start der Anlage sinnvoll entschlüsselt werden könnten.

Da beim Start der Anlage die Zeit, die auf die Entschlüsselung der Applikationsdaten verwendet werden kann, meist beschränkt ist, ist in einer bevorzugten Ausgestaltung der Erfindung vorgesehen, nicht alle Applikationsdaten im externen Speicher verschlüsselt vorzuhalten. Statt dessen werden nur diejenigen Applikationsdaten verschlüsselt, die für ein schutzwürdiges Verhalten der Anlage relevant sind. Im Beispielfall einer Brennkraftmaschine kann dies beispielsweise die Leistung und/oder Abgasverhalten sein. Für eine Weiterbildung wird man die Menge der verschlüsselt abgelegten Applikationsdaten so auswählen, daß die Entschlüsselung in einer vorbestimmten Zeitspanne erfolgen kann.

Um sicherzustellen, daß der Zugriff auf die im internen Arbeitsspeicher abgelegten entschlüsselten Applikationsdaten nicht manipuliert werden kann, ist es vorzuziehen, die die Steuerungs- und/oder Regelungsaufgaben durchführende Recheneinheit mit dem internen Arbeitsspeicher manipulationssicher auszugestalten, was besonders bevorzugt durch Ausführung als integrierter Baustein, beispielsweise in einem Mikroprozessor erfolgen kann.

Bevorzugte Ausgestaltungen der Erfindung sind Gegenstand der Unteransprüche.

Die Erfindung wird nachfolgend unter Bezugnahme auf die Zeichnung in einem Ausführungsbeispiel näher erläutert. In der Zeichnung zeigt:
- Fig. 1: ein Blockschaltbild einer Vorrichtung zur Steuerung und/oder Regelung einer Anlage und
- Fig. 2: ein Ablaufschema mit Verschlüsselung und Entschlüsselung.

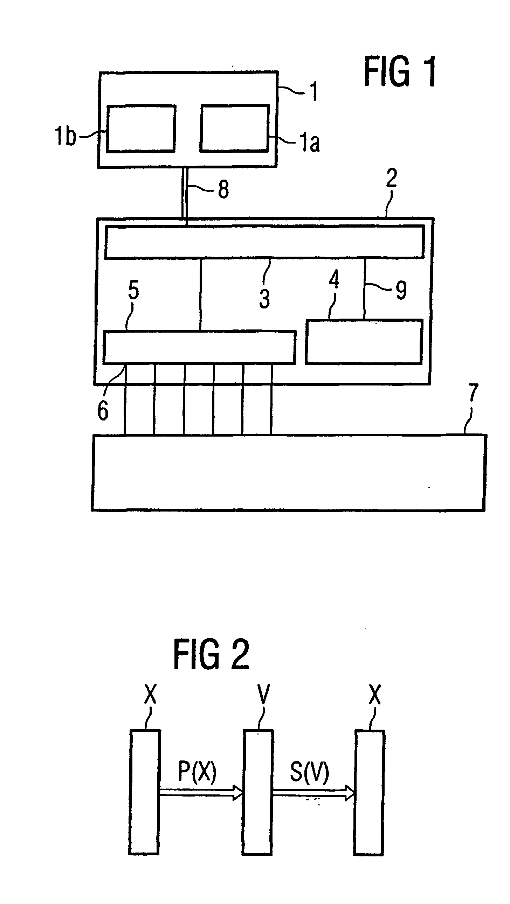

In Fig. 1 ist ein Mikroprozessor 2 mit einem ROM 1 dargestellt, die Teil eines (nicht dargestellten) Steuergerätes einer als Block dargestellten Brennkraftmaschine 7 sind. Der Betrieb der Brennkraftmaschine 7 wird vom Steuergerät über Steuerleitungen 6 gesteuert bzw. geregelt.

Der Mikroprozessor weist ein Rechenwerk 3 auf, das u.a. auf I/O-Ports 5 zugreift, an die die Steuerleitungen 6 angeschlossen sind. Weiter hat das Rechenwerk 3 über einen internen Datenbus 9 Verbindung zu einem RAM 4. Beim RAM 4 handelt es sich um einen flüchtigen Speicher, d.h. um einen Speicher, dessen Inhalt nach Abschalten des Steuergerätes verloren geht. Der RAM 4 ist der Arbeitsspeicher des Mikroprozessors 2. Der Mikroprozessor 2 ist als IC-Baustein ausgeführt, so daß der RAM 4 nicht auf einem externen Datenbus 8 sichtbar ist. Somit kann auch mittels moderner Meßgeräte nicht auf die im RAM 4 vorhandenen Daten zugegriffen werden.

Der Mikroprozessor 2 ist weiter über den Datenbus 8 mit dem ROM 1 verbunden, der als externer Speicher dient. Dieser ROM 1 ist, beispielsweise durch Batteriepufferung, so ausgebildet, daß er auch nach Abschalten des Steuergerätes die darin befindlichen Daten behält. Der ROM 1 hat mehrere Speicherbereiche, beispielhaft sind ein Speicherbereich 1b für verschlüsselte Applikationsdaten und ein Speicherbereich 1a für nicht verschlüsselte Applikationsdaten dargestellt.

Auf die Art der Verschlüsselung und deren Funktion wird später noch eingegangen werden. Die Applikationsdaten im Speicherbereich 1a und 1b sind Kennfelder, die für den Betrieb der Brennkraftmaschine wesentlich sind. Beispielsweise kann es sich dabei um Kennfelder handeln, die abhängig von Betriebsparametern der Brennkraftmaschine 7 die einzuspritzende Kraftstoffmasse ausgeben.

Beim Start der Brennkraftmaschine 7 liest der Mikroprozessor 2 die Applikationsdaten aus dem ROM 1. Die unverschlüsselten Applikationsdaten des Speicherbereichs 1a werden direkt in den RAM 4 eingegeben. Die verschlüsselten Applikationsdaten des Speicherbereiches 1b werden vom Rechenwerk 3 zuerst unter Verwendung eines Entschlüsselungskodes entschlüsselt und dann in entschlüsselter Form im RAM 4 abgelegt. Auf den Entschlüsselungsvorgang wird später noch eingegangen werden. Der Entschlüsselungskode kann entweder in einem weiteren Speicherbereich des ROM 1 oder in einem dritten Speicher abgelegt sein. Optional ist es möglich, nur die verschlüsselten Applikationsdaten des Speicherbereiches 1b nach der Entschlüsselung in den RAM 4 einzugeben und die unverschlüsselten Applikationsdaten im Speicherbereich 1a zu belassen. Zur Regelung und/oder Steuerung der Brennkraftmaschine 7 greift der Mikroprozessor 2 dann auf die unverschlüsselten Applikationsdaten im RAM 4 und eventuell auch noch im Speicherbereich 1a zu. Die Menge der zu entschlüsselnden Daten im Speicherbereich 1b ist so bemessen, daß sie innerhalb der Startphase der Brennkraftmaschine 7 in einer zulässigen, vorbestimmten Zeitdauer entschlüsselt werden können. Da die verschlüsselten Applikationsdaten während des normalen Betriebes nicht mehr entschlüsselt werden müssen, sondern bereits in entschlüsselter Form im RAM 4 liegen, treten während des Betriebs der Brennkraftmaschine 7 durch den Entschlüsselungsvorgang keine Laufzeitverzögerungen oder -probleme auf. Da der RAM 4, wie oben ausgeführt, nicht über den externen Datenbus 8 ansprechbar bzw. sichtbar ist, ist es unmöglich, die verschlüsselten Applikationsdaten des Speicherbereichs 1b mit ihrer unverschlüsselten Form im RAM 4 zu vergleichen, um auf den Verschlüsselungsalgorithmus rückzuschließen.

Die Verschlüsselung der Applikationsdaten zur Ablage als verschlüsselte Applikationsdaten im Speicherbereich 1b ist beispielhaft in Fig. 2 dargestellt. Es wird ein asymmetrisches Kryptographieverfahren verwendet. Ein asymmetrisches Verschlüsselungsverfahren verwendet zum Verschlüsseln einen anderen Schlüssel als zum Entschlüsseln. Mit Kenntnis des Entschlüsselungskodes kann nicht auf den Verschlüsselungskode geschlossen werden. Auch ein Vergleich von verschlüsselten und entschlüsselten Daten ermöglicht in der Regel keinen Rückschluß auf den Verschlüsselungskode. Asymmetrische Verschlüsselungsverfahren sind in der Kryptographietechnik bekannt. Ein bekannter Algorithmus für ein solches asymmetrisches Kryptographieverfahren ist der RSA-Algorithmus, der nach seinen Entwicklern Rivest, Shamir und Adleman benannt ist. Er ist beispielweise in folgender Veröffentlichung beschrieben: R. Rivest, A. Shamir, L. Adleman, "A Method for Obtaining Digital Signatures and Public Key Cryptosystems", Communications of the ACM, S. 120 bis 128, Feb. 1978. Eine genaue Beschreibung asymmetrischer Kryptographieverfahren findet sich auch in Bruce Shneyer, "Applied Cryptography", 2. Aufl. Der Offenbarungsgehalt dieser beiden Veröffentlichungen wird vollumfänglich hier einbezogen.

Natürlich wird für jede Weiterentwicklung der Applikationsdaten ein neues Schlüsselpaar aus Verschlüsselungsschlüssel und Entschlüsselungsschlüssel verwendet. Somit wäre ein "geknack-ter" Verschlüsselungskode nur zur Manipulation einer stark eingeschränkten Anzahl von Steuergeräten tauglich, da bei Herausgabe eines neuen Datenstandes mit neuen Applikationsdaten der "geknackte" Verschlüsselungsschlüssel nicht mehr tauglich wäre.

In dieser Ausführungsform mit asymmetrischer Kryptographie werden die als Klardaten X vorliegenden Applikationsdaten zuerst mit einem Verschlüsselungsvorgang P(X) verschlüsselt. Diese Verschlüsselung nimmt der Hersteller vor, wenn er den ROM 1 mit den entsprechenden Daten füllt. Dann sind im Speicherbereich 1b lediglich verschlüsselte Daten V vorhanden. Beim Auslesen der verschlüsselten Daten während des Startvorgangs werden die verschlüsselten Daten V mittels eines Entschlüsselungsvorgangs S(V) verschlüsselt und können dann als Klardaten X in den RAM 4 eingegeben werden.

In einer alternativen Ausbildung ist es auch möglich, ein sogenanntes symmetrisches Verschlüsselungsverfahren anzuwenden, bei dem für Ver- und Entschlüsselung jeweils derselbe Schlüssel Anwendung findet.

Dann muß der Schlüssel manipulationssicher im Mikroprozessor 2 untergebracht werden. Dies kann beispielsweise durch Vorsehen eines statischen Speichers im Mikroprozessor 2 geschehen, auf den von außen nicht zugegriffen werden kann, ohne den Mikroprozessor 2 zu zerstören.

Es ist bei einem unbefugten Eingriff unmöglich, sinnvoll verschlüsselte Applikationsdaten zu erzeugen, d.h. Applikationsdaten, die nach der Entschlüsselung für den Mikroprozessor 2 sinnvolle Daten ergäben.

Zur Steigerung der Sicherheit kann man im Mikroprozessor 2 eine zusätzliche Überprüfung der entschlüsselten Applikationsdaten im RAM 4 durchführen, beispielsweise indem Schutzwörter überprüft werden. Bei Detektion einer Manipulation kann man auf einen Sonderbetriebszustand, beispielsweise einen Betrieb mit reduzierter Leistung, oder sogar ein Stillegen der Anlage umschalten.

## Patentansprüche

1. Vorrichtung zur Steuerung und/oder Regelung einer Anlage insbesondere einer Brennkraftmaschine (7) mit:
- einer Recheneinheit (3), die zur Steuerung und/oder Regelung erforderliche Berechnungen unter Verwendung von Applikätionsdaten durchführt und entsprechend Stellausgänge (6) betätigt,
- einem internen Arbeitsspeicher (4), der mit der Recheneinheit (3) über einen internen Kommunikationskanal (9) verbunden ist und Daten flüchtig speichert, und
- einem externen Speicher (1), der mindestens einen Teil der verwendeten Applikationsdaten verschlüsselt und nichtflüchtig enthält und der mit der Recheneinheit (3) über einen externen Kommunikationskanal (8) verbunden ist, wobei
- die Recheneinheit (3) beim Start der Vorrichtung die verschlüsselten Applikationsdaten aus dem externen Speicher (1) einliest, dann die Applikationsdaten unter Verwendung eines Entschlüsselungskodes entschlüsselt, im internen Arbeitsspeicher (4) ablegt und im weiteren Betrieb auf diese entschlüsselten Applikationsdaten im Arbeitsspeicher (4) zugreift.

2. Vorrichtung nach Anspruch 1, **dadurch gekennzeichnet, daß** der externe Speicher (1) den Entschlüsselungskode enthält, der so ausgebildet ist, daß er eine Entschlüsselung der Applikationsdaten erlaubt, aber keine Verschlüsselung von Applikationsdaten.

3. Vorrichtung nach einem der vorhergehenden Ansprüche, **dadurch gekennzeichnet, daß** für die Leistung, die Lebensdauer und/oder die Betriebssicherheit der Anlage (7) relevante Applikationsdaten in dem externen Speicher (1) verschlüsselt abgelegt sind.

4. Vorrichtung nach einem der vorhergehenden Ansprüche, **dadurch gekennzeichnet, daß** der Teil der Applikationsdaten, der verschlüsselt abgelegt ist, so beschaffen ist, daß die Recheneinheit (3) die Entschlüsselung in einer vorbestimmten Zeitspanne durchführt.

5. Vorrichtung nach einem der vorhergehenden Ansprüche, **dadurch gekennzeichnet, daß** Recheneinheit (3), interner Arbeitsspeicher (4) und interner Kommunikationskanal (9) als integrierter Baustein (2) ausgeführt sind.

6. Verfahren zur Steuerung und/oder Regelung einer Anlage, insbesondere einer Brennkraftmaschine, bei dem
- bei Start der Anlage verschlüsselte Applikationsdaten aus einem externen Speicher in einen internen Arbeitsspeicher einer Recheneinheit geladen werden,
- die verschlüsselten Applikationsdaten dabei oder danach unter Verwendung eines Entschlüsselungskodes entschlüsselt und so im internen Arbeitsspeicher abgelegt werden, und
- zur Steuerung und/oder Regelung auf die entschlüsselten Applikationsdaten zugegriffen wird, wobei
- der Entschlüsselungskode nicht zur Verschlüsselung von Applikationsdaten tauglich ist.

7. Verfahren nach Anspruch 6, **dadurch gekennzeichnet, daß** zur Verschlüsselung und Entschlüsselung der Applikationsdaten ein RSA-Algorithmus verwendet wird.

## Claims

1. Device for controlling and/or regulating a unit, in particular an internal combustion engine (7) with:
- a computer unit (3), which executes the necessary calculations for control and/or regulation using application data and activates actuation outputs (6) accordingly,
- an internal main memory (4) which is connected to the computer unit (3) via an internal communication channel (9) and stores data in a volatile memory, and
- an external memory (1) which encrypts at least part of the application data used and holds it in a non-volatile memory and which is connected to the computer unit (3) via an external communication channel (8), with
- the computer unit (3) reading in the encrypted application data from the external memory (1) when the device starts up, then decrypting the application data using a decryption code, storing it in the internal main memory (4) and during the course of further operation accessing this decrypted application data in the main memory (4).

2. Device according to Claim 1, **characterised in that** the external memory (1) contains the decryption code, which is configured so that it allows decryption of the application data but not encryption of application data.

3. Device according to one of the preceding claims, **characterised in that** application data relevant to the performance, life and/or operational security of the unit (7) is stored encrypted in the external memory (1).

4. Device according to one of the preceding claims, **characterised in that** the part of the application data which is stored encrypted is such that the computer unit (3) executes the encryption operation in a predetermined time period.

5. Device according to one of the preceding claims, **characterised in that** the computer unit (3), internal main memory (4) and internal communication channel (9) are configured as an integrated module (2).

6. Method for controlling and/or regulating a unit, in particular an internal combustion engine, in which
- when the unit starts up, encrypted application data is uploaded from an external memory into an internal main memory of a computer unit;
- during or after this operation, the encrypted application data is decrypted using a decryption code and stored thus in the internal main memory, and
- the decrypted application data is accessed for control and/or regulation purposes, with
- the decryption code not being suitable for encrypting application data.

7. Method according to Claim 6, **characterised in that** an RSA algorithm is used to encrypt and decrypt the application data.

## Revendications

1. Dispositif de commande et/ou de régulation d'une installation technique, en particulier d'un moteur à combustion interne (7), comprenant :
- une unité de calcul (3), qui exécute les calculs nécessaires pour la commande et/ou la régulation et qui active des sorties de commande correspondantes (6),
- une mémoire de travail interne (4), qui est reliée à l'unité de calcul (3) par un canal de communication interne (9) et stocke des données de façon volatile, et
- une mémoire externe (1), qui verrouille et contient de façon non volatile au moins une partie des données d'application utilisées et qui est reliée à l'unité de calcul (3) par un canal de communication externe (8), dans lequel
- l'unité de calcul (3) lit, au démarrage du dispositif, les données d'application verrouillées dans la mémoire externe (1), déverrouille ensuite les données d'application en utilisant un code de déverrouillage, les dépose dans la mémoire de travail interne (4) et accède, dans la suite du fonctionnement, à ces données d'application déverrouillées dans la mémoire de travail (4).

2. Dispositif selon la revendication 1, **caractérisé en ce que** la mémoir) contient le code de déverrouillage, qui est conçu de façon à permettre un déverrouillage des données d'application, mais pas un verrouillage de données d'application.

3. Dispositif selon l'une quelconque des revendications précédentes, **caractérisé en ce que** des données d'application pertinentes pour la puissance, la durée de vie et/ou la sécurité de fonctionnement de l'installation technique (7) sont stockées sous forme verrouillée dans la mémoire externe (1).

4. Dispositif selon l'une quelconque des revendications précédentes, **caractérisé en ce que** la partie des données d'application, qui est stockée sous forme verrouillée, est constituée de telle façon que l'unité de calcul (3) exécute le déverrouillage en un laps de temps prédéterminé.

5. Dispositif selon l'une quelconque des revendications précédentes, **caractérisé en ce que** l'unité de calcul (3), la mémoire de travail interne (4) et le canal de communication interne (9) sont réalisés sous forme de module intégré (2).

6. Procédé de commande et/ou de régulation d'une installation technique, en particulier d'un moteur à combustion interne, dans lequel
- au démarrage de l'installation technique, on charge des données d'application verrouillées de la mémoire externe dans une mémoire de travail interne d'une unité de calcul,
- on déverrouille alors ou ensuite les données d'application verrouillées en utilisant un code de déverrouillage et on les dépose ainsi dans la mémoire de travail interne, et
- on accède aux données d'application déverrouillées pour la commande et/ou la régulation, dans lequel
- le code de déverrouillage ne peut pas servir pour le verrouillage de données d'application.

7. Procédé selon la revendication 6, **caractérisé en ce que** l'on utilise un algorithme RSA pour le verrouillage et le déverrouillage des données d'application.
